# EUROPEAN PATENT SPECIFICATION

(11) **EP 1 741 761 B1**
(45) Date of publication and mention of the grant of the patent: **16.12.2009**
(21) Application number: 06014035.7
(22) Date of filing: 06.07.2006
(51) Int. Cl.: C09D 7/12, C09D 17/00, C09D 7/14, C09C 1/58, C09B 67/00

(54) **Carbon black paint and method for manufacturing the same**
Carbon Black Anstrich und Verfahren zu dessen Herstellung
Peinture à base de noir de carbone, et son procédé de fabrication

(30) Priority: 08.07.2005 JP 2005199989
(43) Date of publication of application: 10.01.2007
(73) Proprietor: FUJIFILM Corporation, Minato-ku Tokyo (JP)
(72) Inventor: Matsuda, Keisuke, Odawara-shi Kanagawa (JP)
(74) Representative: HOFFMANN EITLE

(56) References cited:
- EP-A- 1 316 590
- US-A- 4 693 879
- US-A- 5 059 249
- US-A1- 2005 008 560

## Description

### BACKGROUND OF THE INVENTION

### Field of the Invention

The present invention relates to a carbon black paint and a method for manufacturing the same, in particular, to a carbon black paint used for black paints or magnetic recording media and a method for manufacturing the same.

### Description of the Related Art

In the manufacture of paintings via dispersion of carbon black, ball mill, sand mill or the like has been traditionally used. However, carbon black paints in which carbon black is highly dispersed are hard to obtain by the dispersion treatment alone. Thus, prior to the dispersion treatment, a pretreatment step is required. The easiest and simplest method that includes a pretreatment step for manufacturing carbon black paints is, for example, stirring, such as stirring/dispersing of carbon black on a dissolver type of stirrer. However, a simple stirring operation alone cannot disperse carbon black, thereby allowing a large amount of sediment to remain on the bottom of the container. Thus, an intended carbon black paint cannot be attained. Even if stirring is carried out after dissolving a binder, such as a vinyl chloride based binder in an organic solvent and then adding carbon black thereto in advance, a sediment is also produced, whereby a carbon black paint cannot be manufactured.

There is another method for manufacturing a carbon black paint that includes a pretreatment step, wherein the pretreatment step is a step of breaking carbon black particles apart with a high shear force, such as a kneading step using a kneader or a pressure kneader or milling step using a triple roll mill or twin roll mill. In the pretreatment step, it is critical how to break carbon black particles apart easily to attain a paint. However, in the above described method, a large-scale machine is required, and besides, consideration has to be given to pyrolysis of the binder resin added; thus, employing such a method has a detrimental effect not only on the product quality, but also on manufacturing cost.

There is proposed an alternative to the above described method in which a carbon black paint is manufactured via a pre-dispersion of carbon black by employing a wet milling process with a ball mill (e.g. Japanese Patent Application Laid-Open No. 4-45176).

US-A-2005/008 560 discloses an ultradispersed solution of nano-sized carbon particles obtained principally by applying a wet-type milling method to an aggregate structure of the nano-sized carbon particles. The wet-type milling method is carried out in a ball mill, preferably carried out in combination with a high-energy ultrasonic-wave process in a dispersing medium such as pure water.

EP-A-1 316 590 discloses a method for oxidising an organic pigment by dispersing the pigment in an aqueous medium and subjecting the dispersion to ultrasonic radiation. The treatment optionally includes an oxidising agent, and continues until the exposed pigment has 3-10 micro-equivalents of carboxylic acid, or salts thereof, per square meter of its surface.

### SUMMARY OF THE INVENTION

However, even in the method proposed in Japanese Patent Application Laid-Open No. 4-45176, the pretreatment step is still complicated; thus, an easier and simpler method for manufacturing a carbon black paint is desired. Further, addition of a dispersant or binder is common practice in any of the above described methods. However, dispersants or binders are generally susceptible to pyrolysis, and thus paint formulation and treatment tend to be restricted.

As described above, conventional carbon black dispersing techniques have the disadvantages that: (1) they are likely to cause sediment, whereby carbon black paints of high quality cannot be manufactured; (2) they need to use a dispersant or binder, which is susceptible to pyrolysis, whereby paint formulation and treatment tend to be restricted; and (3) the pretreatment step is made complicated or a large-scale machine is required, and thus, they are not satisfactory.

The present invention has been made in the light of the above described circumstances. Accordingly, the object of the present invention is to provide a method for manufacturing a carbon black paint in which neither dispersant nor binder is required, easy and compact dispersion treatment is employed and sediment is less likely to occur and a carbon black paint manufactured by the method.

To attain the aforementioned object, according to a first aspect of the present invention, there is provided a method for manufacturing a carbon black paint comprising dispersing carbon black powder in an organic solvent, wherein the dispersion treatment of the carbon black powder is carried out by ultrasonic dispersion treatment without using a dispersant and/or a binder.

It is generally hard to prevent the occurrence of sediment in manufacture of a carbon black paint simply by prolonging the stirring time. So the present inventors directed their attention to the mechanism of ultrasonic dispersion as a method for manufacturing a paint. Namely, the inventor carried out the dispersion treatment of carbon black powder by ultrasonic dispersion treatment, specifically by applying an ultrasonic wave to the organic solvent to vibrate the same. The mechanism of the dispersion is as follows. The application of ultrasonic to the organic solvent causes minute cavities (hereinafter referred to as cavities) in the solvent, and the impact force produced when the cavities burst allows the carbon black to be dispersed in the organic solvent. The size or the number of the cavities produced can be controlled by the output or frequency of the ultrasonic wave applied, and thus, if the output or frequency of the ultrasonic wave is properly selected at the time of the ultrasonic dispersion, the carbon black powder can be dispersed with its particle size kept subµm to µm.

In dispersion of carbon black powder in an organic solvent, use of a dispersant or a binder is common practice; however, according to the present invention, carbon black powder can be suitably dispersed in an organic solvent which contains neither dispersant nor binder. Conversely, if a dispersant or a binder is used in the organic solvent, the dispersibility in the carbon black powder is lowered. Accordingly, in the present invention, the dispersion of the carbon black powder is carried out without using a dispersant and/or a binder, whereby a carbon black paint can be manufactured without restrictions on paint formulation and treatment.

In this first aspect of the present invention, the organic solvent is stirred and the ultrasonic wave is applied thereto in advance, and then the carbon black powder is added to the organic solvent in such a state.

The reason for this is that sediment is less likely to occur when carbon black powder is added to an organic solvent to which a sufficient flowability has been given by stirring and an ultrasonic wave has been applied, although it is possible to add carbon black powder to an organic solvent and then stir and apply an ultrasonic wave to the mixture.

According to a second aspect of the present invention, there is provided the method for manufacturing a carbon black paint according to the first aspect, wherein the ultrasonic dispersion treatment is carried out at a frequency of 20 KHz or more.

The frequency of the ultrasonic wave used in the dispersion treatment should be appropriately set depending on the particle size or particle size distribution of the carbon black in a carbon black paint to be manufactured. However, to obtain a good dispersibility, generally preferably the frequency is set at 20 KHz or more.

According to a third aspect of the present invention, there is provided the method for manufacturing a carbon black paint according to the first or the second aspect, wherein the ultrasonic dispersion treatment is carried out by batch process.

The ultrasonic dispersion treatment in the present invention can also be carried out by continuous process; however, in continuous process, short pass is more likely to occur, and thus, the ultrasonic dispersion treatment is preferably carried out by batch process.

According to a fourth aspect of the present invention, there is provided the method for manufacturing a carbon black paint according to any one of the first to third aspects, wherein a solution having undergone the ultrasonic dispersion treatment further undergoes bead mill dispersion treatment.

The carbon black powder can be dispersed with its particle size kept subµm to µm by the ultrasonic dispersion treatment, and if the solution having undergone the ultrasonic dispersion treatment is further subjected to bead mill dispersion treatment, a carbon black paint having been adjusted to a desired dispersion can be obtained.

To attain the aforementioned object, according to a fifth aspect of the present invention, there is provided a carbon black paint manufactured by the method for manufacturing a carbon black paint according to any one of the first to fourth aspects.

By the manufacturing method according to the present invention, a carbon black paint can be obtained in which a sediment is less likely to be produced.

According to the carbon black paint and the method for manufacturing the same of the present invention, a carbon black paint can be manufactured without requiring a dispersant or a binder and using an easy and compact dispersion treatment while keeping sediment less likely to occur.

### BRIEF DESCRIPTION OF THE DRAWINGS

Fig. 1 is a batch treatment flow diagram of ultrasonic dispersion treatment equipment where a carbon black powder undergoes ultrasonic dispersion treatment in accordance with the method for manufacturing a carbon black paint of the present invention;
Fig. 2 is a detail view illustrating an ultrasonic dispersion filter; and
Fig. 3 is a detail view illustrating an ultrasonic dispersion filter in accordance with another embodiment of the present invention.

### DETAILED DESCRIPTION OF THE PREFERRED EMBODIMENTS

In the following preferred embodiments of a carbon black paint of the present invention and a method for manufacturing the same will be described with reference to the accompanying drawings.

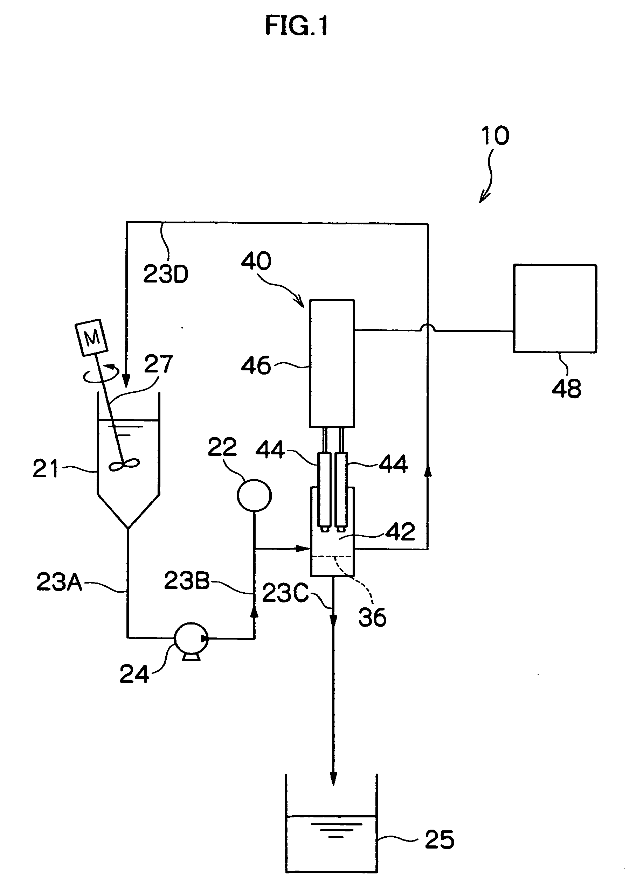

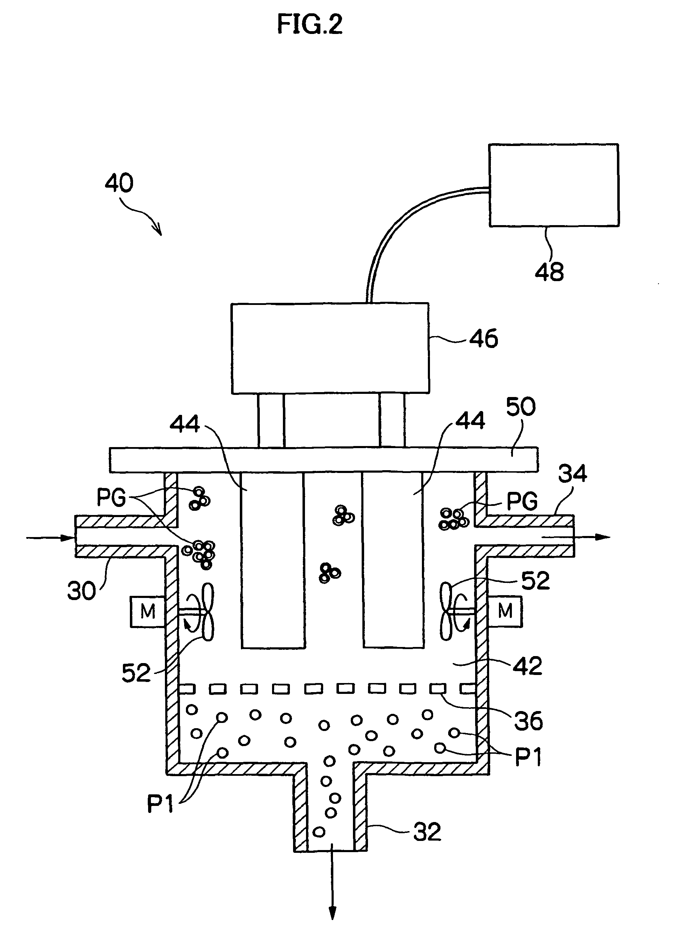

Fig. 1 is a batch treatment flow diagram of ultrasonic dispersion treatment equipment where carbon black powder undergoes ultrasonic dispersion treatment in accordance with the method for manufacturing a carbon black paint of the present invention. Fig. 2 is a detail view of a cross-flow type of ultrasonic dispersion filter incorporated in the batch treatment system.

As shown in Fig. 1, the batch treatment system 10 of the ultrasonic dispersion treatment equipment where carbon black powder undergoes ultrasonic dispersion treatment is made up of: a stock solution tank 21; an ultrasonic dispersion filter 40; a liquid feed pipe 23A from the stock solution tank 21 to the ultrasonic dispersion filter 40; a liquid feed pump 24; a pressure indicator 22 which detects the pressure within the pipe 23B located between the liquid feed pump 24 and the ultrasonic dispersion filter 40; a liquid feed pipe 23C which feeds the solution having undergone ultrasonic dispersion from the ultrasonic dispersion filter 40 downstream; a return pipe 23D which returns the solution returned from the ultrasonic dispersion filter 40 to the stock solution tank 21; a discharge pipe 23C which discharges the solution having undergone dispersion treatment on the ultrasonic dispersion filter 40; and a product tank 25 which stores the solution having undergone dispersion treatment.

In the stock solution tank 21, stored is a batch of stock solution prepared by adding carbon black powder to an organic solvent and homogeneously mixing them by stirring with a stirrer 27. Carbon black powder having an average particle size in the range of 0.01 µm to 100 µm can be suitably used. As an organic solvent, toluene, MEK, cyclohexanone or the like can be used.

In the batch treatment system 10 of the ultrasonic dispersion treatment equipment, a cross-flow type of ultrasonic dispersion filter 40 is employed, as shown in Fig. 2. The cross-flow type filter is of a type explained, compared with a dead-end type filter. Specifically, commonly used cartridge filters are of a dead-end type in which only a liquid feed port and a liquid discharge port are provided and no by-pass is provided. On the other hand, in filters of a cross-flow type, a liquid return pipe, along with a liquid feed port and a liquid discharge port are provided and the solution which cannot be filtered is fed again into the liquid feed port via the return pipe 23D, the stock solution tank 21, etc.

Fig. 2 shows one example of cross-flow type ultrasonic dispersion filter 40. In Fig. 2, the liquid tank 42 of the ultrasonic dispersion filter 40 is a cylindrical container whose bottom portion is connected with the liquid discharge port 32. And on the upper portion of the left side face of the liquid tank 42, provided is a liquid feed port 30 which is connected to the pipe 23B, while on the upper portion of the right side face of the liquid tank 42, provided is a liquid by-pass port 34 which is connected to the pipe 23D. At the lower portion within the liquid tank 42 a filter 36 is provided, and only the solution that passes through the filter 36 can flow out through the liquid discharge port 32 and the solution other than that passing through the filter 36 is returned to the stock solution tank 21 through the liquid by-pass port 34.

The upper end portion of the liquid tank 42 of the ultrasonic dispersion filter 40 is closed by the flange 50 of oscillators 44, 44 to form a closed container. Inside of the liquid tank 42 two cylindrical oscillators 44, 44 are arranged so that an ultrasonic wave can be applied to the liquid that passes through the liquid tank 42. The flange 50 and the oscillators 44, 44 are integrally formed together.

On the top portion of the oscillators 44, 44, a converter 46 is fastened and electricity is supplied from a power supply 48 to the converter 46. Thus, once the ultrasonic dispersion filter 40 is started, ultrasonic vibration is excited through the converter 46, and an ultrasonic wave is applied to the inside of the liquid tank 42 through the oscillators 44, 44.

By employing the ultrasonic dispersion filter 40 thus configured, a stock solution of carbon black powder in an organic solvent is allowed to flow in the liquid tank 42 where an ultrasonic wave is applied to the solution while stirring the solution by a stirrer 52; the solution is then filtered through the filter 36 located near the ultrasonic applying section; and only the dispersion-treated solution passing through the filter 36 is fed to a product tank 25 through a liquid discharge port 32.

In Fig. 2, the primary particles P1, P1, ... dispersed by ultrasonic application have passed through the filter 36, while the agglomerated particles PG cannot pass through the filter 36 and are circulated from the liquid by-pass port 34 to the stock solution tank 21 via the pipe 23D.

When carrying out dispersion treatment on the ultrasonic dispersion filter 40, preferably stirrers 52, 52 are provided on the upper portion of the left side face of the liquid tank 42 and on the lower portion of the right side face of the liquid tank 42, respectively, as shown in Fig. 2. If an ultrasonic wave is applied to the stock solution of carbon black powder in an organic solvent while stirring the solution with the above stirrers, the dispersion of the carbon black can be further improved.

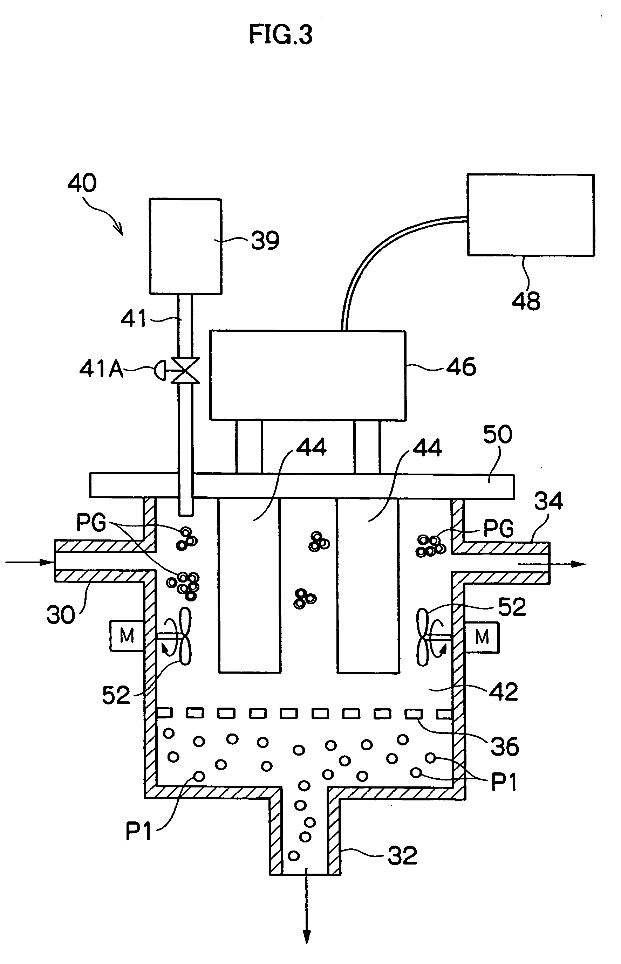

Ultrasonic dispersion treatment equipment can also be employed in which a carbon black storing tank 39 which stores a carbon black powder and an adding pipe 41 with a valve 41A are further provided above the liquid tank 42 and the stock solution tank 21 is allowed to store an organic solvent alone, as shown in Fig. 3. In such equipment, a given amount of organic solvent is fed from the stock solution tank 21 to the ultrasonic dispersion filter 40, the organic solvent is stirred and an ultrasonic wave is applied thereto in the liquid tank 42 in advance, and then a carbon black powder is added from the carbon black storing tank 39 to the liquid tank 42 in such a state. This enables the further improvement in the dispersion of a carbon black powder and the manufacture of a carbon black paint which is less likely to cause sediment.

As the cross-flow type ultrasonic dispersion filter 40 described above, for example, a flow type ultrasonic disperser (trade name: US-1200 TCVP) manufactured by NIHONSEIKI KAISHA LTD. can be used by adapting the same to fit the needs of the present. The specification of the disperser is such that frequency: 20 KHz, maximum amplitude: 30 µm, rated output: 600 W x 2, and the diameter of ultrasonic radiation portion: 50 mm. The inside diameter of the pipes 23A, 23B and 23C is 14 mm.

As the filter 36, a filter made by sintering stainless steel fibers and having a diameter of 80 mm, a thickness of 1.5 mm and a nominal filtration performance of 1 µm can be used, for example.

In the present invention, the ultrasonic dispersion filter 40 is not necessarily of a cross-flow type. It may be a combination of an ultrasonic disperser and a dead-end type filter (e.g. commonly used cartridge filter). Coarse agglomerated particles can be removed by subjecting the stock solution to dispersion treatment by the application of an ultrasonic wave and then filtration. However, when using a dead-end type filter, the flow rate of the solution can sometimes be restricted by clogging of the filter and the filter must be replaced more frequently, thus a cross-flow type ultrasonic dispersion filter 40 is preferably employed. Particularly a cross-flow type ultrasonic dispersion filter in which a filter is located near the ultrasonic radiation portion, as shown in Figs. 2 and 3, is preferable, because filtration is performed while grinding agglomerated particles.

When manufacturing a carbon black paint using the batch treatment system 10 of the ultrasonic dispersion treatment equipment constructed as above, dispersion treatment of a carbon black powder is carried out by ultrasonic dispersion treatment without using a dispersant and/or a binder. Specifically, the dispersion is performed in the following procedure: apply an ultrasonic wave to the organic solvent that contains a carbon black powder to produce cavities in the organic solvent; rupture the agglomeration of the agglomerated particles PG utilizing the impact force generated when the produced cavities implode; and disperse the ruptured primary particles of the carbon black in the organic solvent. In the process, the time required for the production and rupture of cavities is about 10⁻⁵ seconds and the ultimate distance of the impact force for rupture is of the order of µm. The frequency and output of an ultrasonic wave can be appropriately set depending on the particle size and particle size distribution of the carbon black in a carbon black paint to be manufactured. However, to achieve a good dispersion of carbon black, generally preferably the frequency is set at 20 KHz or more and the output at 1000 W or more.

In the present invention, a carbon black powder can be suitably dispersed in an organic solvent when the organic solvent includes neither dispersant nor binder. Conversely, when the organic solvent includes a dispersant or a binder, its dispersibility is lowered. It is presumably because if the organic solvent includes organic matter, such as a binder, during the ultrasonic dispersion treatment of a carbon black powder, the impact force for rupturing cavities which is produced by an ultrasonic wave is decreased by the presence of organic matter. Accordingly, the manufacturing method of the present invention is performed without using a dispersant and/or a binder, whereby a carbon black paint can be manufactured without restrictions on the paint formulation or treatment.

Thus, a carbon black powder can be dispersed with its particle size kept subµm to µm. In the dispersion treatment, it is preferable that a state in which an organic solvent is exposed to an ultrasonic wave while undergoing stirring is prepared in the liquid tank 42 in advance, and then a carbon black powder is added from the carbon black storing tank 39 to the liquid tank 42 in the above state, as described above.

In the present invention, ultrasonic dispersion treatment by continuous process is also possible. However, the treatment by continuous process is more likely to cause short pass, and thus, ultrasonic dispersion treatment by batch process is preferred.

As described so far, a carbon black powder can be dispersed with its particle size kept subµm to µm by ultrasonic dispersion, and thus, if the solution having undergone ultrasonic dispersion treatment is subjected to further dispersion treatment, such as bead mill dispersion treatment, a carbon black paint having a desired degree of dispersion can be manufactured.

### Examples

Dispersion treatment of a carbon black powder in cyclohexanone solvent was carried out under the conditions shown in Table 1 below. The carbon black paints prepared were evaluated for their particle size distribution with LS 230 manufactured by BECKMAN COULTER. The term "parts" used in Examples indicates "parts by weight".

**[Table 1]**

| [Carbon Black Dispersion Conditions] | | | | |
|---|---|---|---|---|
| | Example 1 | Example 2 | Comparative Example 1 | Comparative Example 2 |
| Carbon black | 1 part | 2 parts | 1 part | 1.5 parts |
| Organic solvent (cyclohexanone) | 9 parts | 8 parts | 9 parts | 7 parts |
| Dispersant and binder | None | None | None | 1.5 parts |
| Dispersion method | Ultrasonic dispersion 30 minutes | Ultrasonic dispersion 15 minutes | Dissolver stirring 5 minutes | Ultrasonic dispersion 60 minutes |
| Circumferential stirring velocity of stirrer | 6.0m/s | 9.0m/s | 18m/s | 6.0m/s |
| Presence or absence of sediment | Absent | Absent | Present | Present |

As the carbon black in Table 1, used were carbon black powders that met the requirements described below. As the dispersant and binder in Table 1, used was a binder described below.

### <Carbon black powders>

### Example 1, Comparative Example 1

Average particle size: 0.016 µm

DBP oil absorption: 80 ml/100 g

BET specific surface area: 250 m²/g

### Example 2, Comparative Example 2

Average particle size: 0.08 µm

DBP oil absorption: 63 ml/100 g

BET specific surface area: 23 m²/g

### <Binder>

### Comparative Example 2

Vinyl chloride copolymer

MR-110 manufactured by ZEON CORPORATION

As an ultrasonic disperser, used was a batch type ultrasonic disperser equipped with a stirrer (ultrasonic output: 600W × 2, frequency: 20 KHz, irradiation area: ø36 mm) manufactured by NIHONSEIKI KAISHA LTD., the same one as described above.

The comparison of Example 1 and Comparative Example 1 confirms the effect of using ultrasonic dispersion in manufacture of a paint from a carbon black powder. Specifically, in Comparative Example 1, a carbon black powder was added to cyclohexanone solvent while stirring the solution by dissolver stirring so that the flowability of the solution was fully maintained. However, a paint could not be prepared from the carbon black powder and a large amount of sediment was observed on the bottom of the stirring container. In contrast, in Example 1, the equipment shown in Fig. 3 was used and a carbon black powder was added to cyclohexanone solvent while stirring the solution so that the flowability of the solution was fully maintained, and at the same time, applying an ultrasonic wave. The treatment enabled a carbon black paint to be prepared while preventing sediment from occurring on the bottom of the container.

In Example 2 and Comparative Example 2, a carbon black powder different from that used in Example 1 and Comparative Example 1 was used to confirm the effects of the presence or absence of a binder in manufacture of a paint. In Example 2, the equipment shown in Fig. 3 was used, like in Example 1, and dispersion treatment was carried out without using a binder. On the other hand, in Comparative Example 2, first a cyclohexanone solution that contained a binder was prepared, the solution was stirred while fully keeping the flowability of the solution, and the carbon black was added to the solution while applying an ultrasonic wave. As a result, in Example 2 where ultrasonic dispersion treatment was carried out without using a binder, a carbon black paint could be prepared without causing sediment, like Example 1, while in Comparative Example 2 where a binder was added, a large amount of sediment was formed and a carbon black paint could not be obtained.

The carbon black paints prepared in Examples 1 and 2 were evaluated for their particle size distribution with LS 230 manufactured by BECKMAN COULTER under the measuring conditions below. The results are shown in Table 2. The carbon black paints prepared in Comparative Examples 1 and 2 could not be measured for their particle size distribution because of a large amount of sediment formed. - Measuring conditions

| | |
|---|---|
| Refractive index of cyclohexanone: | 1.451 |
| Refractive index of carbon black | real part: 1.8 |
| | imaginary part: 7 |

**[Table 2]**

| | Example 1 | Example 2 | Comparative Example 1 | Comparative Example 2 |
|---|---|---|---|---|
| Average diameter (µm) | 14.47 | 1.705 | Could not be measured because of a large amount of sediment | |
| D 10 (µm) | 2.871 | 1.004 | | |
| D50 (µm) | 6.190 | 1.513 | | |
| D90 (µm) | 40.62 | 2.636 | | |
| Standard deviation (µm) | 16.72 | 0.631 | | |

For example, the "D10" in Table 2 indicates the particle size when the cumulative volume of fine particles is 10%.

It is known from these results that a method for manufacturing a carbon black paint in which dispersion treatment is carried out, but a dispersant and/or a binder is not used, as in Example 1 or 2, makes it possible to produce an excellent carbon black paint while avoiding the formation of sediment. It is apparent that particularly by the method of Example 2, a carbon black paint having a small average particle size and a good dispersibility can be obtained.

The dispersion degree of the carbon black particles in the carbon black paint obtained without using a dispersant and/or a binder, but by carrying out ultrasonic dispersion can be adjusted by grinding the particles after the ultrasonic dispersion by, for example, bead mill dispersion.

## Claims

1. A method for manufacturing a carbon black paint comprising the step of:
dispersing carbon black powder in an organic solvent,
wherein the dispersion treatment of the carbon black powder is carried out by ultrasonic dispersion treatment without using a dispersant and/or a binder,
wherein the organic solvent is stirred and the ultrasonic wave is applied thereto in advance of addition of the carbon black powder to the organic solvent and where the solvent is in such a state, at the time of addition of the carbon black.

2. The method for manufacturing a carbon black paint according to claim 1, wherein the ultrasonic dispersion treatment is carried out at a frequency of 20 KHz or more.

3. The method for manufacturing a carbon black paint according to claim 1 or claim 2, wherein the ultrasonic dispersion treatment is carried out by batch process (10).

4. The method for manufacturing a carbon black paint according to any one of claims 1 to 3, wherein the solution having undergone the ultrasonic dispersion treatment further undergoes bead mill dispersion treatment.

5. A carbon black paint obtainable by the method for manufacturing a carbon black paint as defined in any one of claims 1 to 4.

## Patentansprüche

1. Verfahren zur Herstellung einer Carbon-Black-Farbe, das den Schritt des Dispergierens von Carbon-Black-Pulver in einem organischen Lösungsmittel umfasst, worin die Dispersionsbehandlung des Carbon-Black-Pulvers durch Ultraschall-Dispersionsbehandlung ohne Verwendung eines Dispergiermittels und/oder eines Binder durchgeführt wird, wobei das organische Lösungsmittel gerührt wird und die Ultraschallwelle vor dem Hinzufügen des Carbon-Black-Pulvers auf es einwirkt, und wobei das Lösungsmittel zum Zeitpunkt des Hinzufügen des Carbon-Black-Pulvers in einem solchen Zustand ist.

2. Verfahren zur Herstellung einer Carbon-Black-Farbe gemäß Anspruch 1, worin die Ultraschall-Dispersionsbehandlung bei einer Frequenz von 20 kHz oder mehr durchgeführt wird.

3. Verfahren zur Herstellung einer Carbon-Black-Farbe gemäß Anspruch 1 oder 2, worin die Ultraschall-Dispersionsbehandlung in einem Batch-Verfahren (10) durchgeführt wird.

4. Verfahren zur Herstellung einer Carbon-Black-Farbe gemäß mindestens einem der Ansprüche 1 bis 3, worin die Lösung, die der Ultraschall-Dispersionsbehandlung unterzogen wurde, weiterhin einer Kugelmühlen-Dispersionsbehandlung unterzogen wird.

5. Carbon-Black-Farbe, die durch das Verfahren zur Herstellung einer Carbon-Black-Farbe, wie in mindestens einem der Ansprüche 1 bis 4 definiert, erhältlich ist.

## Revendications

1. Procédé de fabrication d'une peinture au noir de carbone, comprenant l'étape selon laquelle:
on disperse une poudre de noir de carbone dans un solvant organique,
dans lequel on effectue le traitement de dispersion de la poudre de noir de carbone par traitement de dispersion aux ultrasons sans utiliser de dispersant et/ou de liant, dans lequel on agite le solvant organique et on l'expose aux ondes ultrasonores avant d'ajouter la poudre de noir de carbone au solvant organique, et le solvant est dans cet état au moment de l'addition du noir de carbone.

2. Procédé de fabrication d'une peinture au noir de carbone selon la revendication 1, dans lequel le traitement de dispersion aux ultrasons s'effectue à une fréquence d'au moins 20 kHz.

3. Procédé de fabrication d'une peinture au noir de carbone selon la revendication 1 ou la revendication 2, dans lequel le traitement de dispersion aux ultrasons s'effectue par un procédé discontinu (10).

4. Procédé de fabrication d'une peinture au noir de carbone selon l'une quelconque des revendications 1 à 3, dans lequel la solution ayant subi le traitement de dispersion aux ultrasons subit ensuite un traitement de dispersion au broyeur à billes.

5. Peinture au noir de carbone pouvant être obtenue par le procédé de fabrication d'une peinture au noir de carbone tel que défini dans l'une quelconque des revendications 1 à 4.
